# EUROPÄISCHE PATENTSCHRIFT

(11) **EP 0 555 437 B1**
(45) Veröffentlichungstag und Bekanntmachung des Hinweises auf die Patenterteilung: **30.10.1996**
(21) Anmeldenummer: 92917085.0
(22) Anmeldetag: 08.08.1992
(51) Int. Cl.: G08B 25/01, B60R 25/00

(54) **ALARM- UND MELDEANLAGE FÜR FAHRZEUGE**
ALARM AND SIGNAL-GENERATING SYSTEM FOR VEHICLES
SYSTEME D'ALARME ET DE SIGNALISATION POUR VEHICULES

(30) Priorität: 30.08.1991 DE 4128855; 03.12.1991 DE 4139790; 11.02.1992 DE 4203865; 01.07.1992 DE 4221585; 26.07.1992 DE 4224536
(43) Veröffentlichungstag der Anmeldung: 18.08.1993
(73) Patentinhaber: Matouschek, Erich, D-72584 Hülben (DE); Matouschek, Thomas, D-72584 Hülben (DE); WALLISER, Brigitte, D-72622 Nürtingen (DE)
(72) Erfinder: Matouschek, Erich, D-72584 Hülben (DE); Matouschek, Thomas, D-72584 Hülben (DE); WALLISER, Brigitte, D-72622 Nürtingen (DE)
(74) Vertreter: Vetter, Hans, Dipl.-Phys. Dr.
(86) Internationale Anmeldenummer: EP9201810
(87) Internationale Veröffentlichungsnummer: WO9305490

(56) Entgegenhaltungen:
- EP-A- 0 242 099
- FR-A- 2 541 801
- GB-A- 2 045 988
- GB-A- 2 188 463
- US-A- 4 329 681

## Beschreibung

Weltweit ist derzeit ein Ansteigen der Diebstahlskriminalität zu beobachten, insbesondere Kraftfahrzeuge betreffend. Zum Beispiel begünstigt der weitgehende Wegfall der Grenzkontrollen innerhalb der Europäischen Wirtschaftsgemeinschaft ab 1993 die ohnehin ständig steigende Diebstahlskriminalität. Einen weiteren Wachstumsimpuls erhält diese durch die aktuelle politische Entwicklung in Mittel- und Osteuropa. Die Brisanz liegt im Gefälle des Lebensstandards zwischen diesen nun plötzlich gegenseitig zugänglichen Wirtschaftsräumen.

Verschärft wird die Lage durch einen in den Ländern des ehemaligen Ostblocks gut organisierten "schwarzen Markt", der eine sofort verfügbare, gigantische Hehlerorganisation darstellt. Über diesen Schwarzen Markt sind Wirtschaftsgüter in einem Umfang absetzbar, der unser derzeitiges Vorstellungsvermögen übersteigen dürfte.

Besonders betroffen sind heute schon Land- (Pkw/Lkw), aber auch Luft- und Wasserfahrzeuge. Im Jahre 1991 sind alleine in der Bundesrepublik Deutschland ca. 38.000 Pkw, in Italien rund 7.000 Lkw, die gestohlen gemeldet wurden, nicht mehr aufgefunden worden.

Zur Alarmüberwachung werden bisher Alarmanlagen eingesetzt, die darauf ausgerichtet sind, die Außenhaut (Türen und Fenster) zu sichern,und durch Bewegungs-, Ultraschallmelder oder dergleichen den Innenraum überwachen. Dadurch soll das Beschädigen oder Eindringen in ein Fahrzeug rechtzeitig optisch und/oder akustisch gemeldet und der Täter abgeschreckt werden. Das Eingreifen von Hilfs- oder Sicherheitskräften wie z. B. der Polizei ist davon abhängig, ob der Alarm überhaupt bemerkt wird und ob der Alarmentdecker sich zur Weiterleitung des Alarms an die Polizei oder sonstige Hilfsdienste entschließt.

Die Häufigkeit der Falschalarme durch die derzeit üblichen Alarmanlagen führt dazu, daß seitens der Alarmentdecker der Alarm nicht mehr ernst genommen wird und Straftäter sich von einem ausgelösten Alarm nicht mehr abschrecken lassen.

Verständigt der Entdecker die Polizei, erhält der Täter einen wichtigen Zeitvorsprung, da regelmäßig Sperren wie z. B. Türschloß oder Zündschloß mit Auslösung des Alarms bereits überwunden sind. Der Täter hat Zeit genug, sich und seine Beute bis zum Eintreffen der Hilfskräfte in Sicherheit zu bringen.

Einen weiteren Nachteil weisen die derzeit üblichen Alarmanlagen auf : Sie müssen über ein spezielles, außerhalb des Fahrzeugs angebrachtes Schloß nach dem Abschließen des Fahrzeugs "scharf" geschaltet werden. Daraus ergibt sich eine Reihe von Bedienungsfehlern; es kann beispielsweise vergessen werden, die Anlage überhaupt scharf bzw. vor dem Aufschließen der Tür "unscharf" zu schalten oder Fenster oder Schiebedach sind nicht geschlossen bei eingeschalteter Alarmanlage. Bedienungsfehler sind also vorprogrammiert.

Ferner sind bekannte Alarmanlagen nicht in der Lage, einen Diebstahl des Fahrzeugs zu erkennen, wenn dieses ohne Veränderung der Lageneigung hochgehoben, auf einen Transporter verladen und abtransportiert wird.

Die derzeitigen Alarmanlagen sind außerdem nicht in der Lage, schwere Unfälle über einen speziellen Melder zu erkennen und diesen mit den Koordinaten des Unfallortes den Hilfsdiensten oder der Polizei zu melden.

Der derzeit zur Auslösung des sogenannten Airbag eingesetzte Melder könnte bauartbedingt nur dann einen Unfall melden, wenn die hierbei auf ihn einwirkenden Kräfte aus Fahrtrichtung, von hinten, von rechts und von links erfolgen. Diagonal hierzu oder von oben erfolgende Kräfte führen nicht zu einer sicheren und falschalarmfreien Meldung.

Die Dokumente FR-A-2 541 801 und EP-A-0 242 099 geben Systeme an, mit denen die Position eines Fahrzeugs durch Satellitenortung erfaßt wird, wobei die Position per Funk an eine ortsfeste Station übermittelt wird, wenn das Fahrzeug unberechtigt bewegt wird.

Die Aufgabe der in Anspruch 1 angegebenen Erfindung besteht darin, eine Alarm- und Meldeanlage zu schaffen, die Bedienungsfehler ausschließt, und die sicher und falschalarmfrei einen Diebstahl des Fahrzeugs an Hilfsstationen weiterleitet und diesen nähere Informationen gibt.

Durch die in den abhängigen Ansprüchen angegebenen Maßnahmen können darüberhinaus auch Einbrüche oder schwere Verkehrsumfälle detektiert werden. Die Information darüber wird ebenfalls weiter geleitet.

Die erfindungsgemäße Alarm- und Meldeanlage hat den Vorteil, daß ein ausgelöster Alarm nicht nur automatisch über Funk eine zu Gegenmaßnahmen fähige Hilfsstation erreicht, sondern daß auch gleichzeitig die jeweilige Position des Fahrzeugs durchgegeben wird, so daß das Fahrzeug wiederaufgefunden werden kann. Im Falle eines Diebstahls kann dadurch jederzeit die jeweilige Position des entwendeten Fahrzeugs festgestellt werden, und im Falle eines Einbruchs oder Unfalls die entsprechende Standposition des Fahrzeugs. Ein weiterer Vorteil besteht noch darin, daß z.B. im Falle eines Einbruchs oder Diebstahls der Dieb die Auslösung des Alarms selbst nicht bemerkt, so daß er möglicherweise noch am Einbruchsort gefaßt werden kann. Durch die Satellitenortung kann die jeweilige Position des Fahrzeugs sehr exakt festgestellt werden. Hilfsstationen sind beispielsweise die Polizei, die Unfallrettung oder andere Hilfsdienste.

Durch die in den Unteransprüchen aufgeführten Maßnahmen sind vorteilhafte Weiterbildungen und Verbesserungen der im Anspruch 1 angegebenen Alarm- und Meldeanlage möglich.

Zweckmäßigerweise ist eine Speichereinrichtung zum Abspeichern wenigstens der zuletzt bestimmten Position des Fahrzeugs vorgesehen, so daß ein ständiger Vergleich möglich ist, ob sich die Position verändert hat. Hierzu sind Mittel zum Vergleich von zeitlich nacheinander erfaßten Positionen des Fahrzeugs und zur Aktivierung der Signalvorrichtung bei Erkennung einer Abweichung als Auslösevorrichtung vorgesehen. Somit kann sofort reagiert werden, und über die Direktverbindung mit dem entwendeten Fahrzeug können die jeweils aktuellen Positionsdaten in die Fahndung einbezogen werden.

Als Sicherung gegen den Einbruch ins Fahrzeug ist in vorteilhafter Weise als Auslösevorrichtung ein beim Abreißen die Signalvorrichtung aktivierender Alarmdraht vorgesehen, der im Schließ- oder Scharnierbereich wenigstens eines zu sichernden Behälters oder Raums und/oder zur Sicherung einer Behälterwandung diese in engen Abständen überdeckend angeordnet ist. Bei einem derartigen Behälter kann es sich um den Motorraum und/oder den Kofferraum und/oder das Handschuhfach und/oder einen Wertbehälter im Kofferraum handeln. Bei einem Einbruchsversuch wird der Funkalarm ausgelöst und die jeweilige Fahrzeugposition durchgegeben. Die Auslösung kann auch mittels eines Schalters erfolgen.

Um beispielsweise der Polizei mehr Zeit zu geben, um das Fahrzeug zu erreichen, an dem ein Einbruch oder Einbruchsversuch vorgenommen wird, ist wenigstens eine zur Verankerung des Schließ- oder Scharnierbereichs dienende Schraube oder ein Bolzen an einer Sollbruchstelle abgestützt, die mit dem Alarmdraht versehen ist oder deren Brechen den Schalter auslöst. Zwischen der Sollbruchstelle und den beiden durch die Schraube oder den Bolzen verbundenenen Teilen ist ein beim Brechen der Sollbruchstelle der Schraube einen Spielraum verschaffender Abstand vorgesehen. Bei einem Aufbruchsversuch bricht zunächst die Sollbruchstelle, und der Alarm wird sicher ausgelöst. Danach verankert sich der mechanische Teil des Melders erneut, so daß der Täter wiederum zum Aufbrechen ansetzen muß, wobei ihm jetzt ein höherer Widerstand entgegengesetzt wird. Dies bindet ihn zeitlich und verschafft der Polizei mehr Zeit, den Tatort zu erreichen.

Da es sich hierbei um eine reine Ruhestrom-Überwachung handelt, sind Falschalarme nahezu ausgeschlossen.

In vorteilhafter Weise kann auch ein versteckt angeordneter Notschalter als Auslösevorrichtung vorgesehen sein. Dies ist insbesondere für Taxifahrer von Wichtigkeit, wenn diese überfallen werden. Durch Betätigen des Notschalters wird der Funkalarm ausgelöst und die Position des Fahrzeugs durchgegeben, ohne daß der Täter dies bemerkt.

Auch ein bei einer vorgebbaren Verzögerung ansprechender Verzögerungssensor kann zweckmäßigerweise als Auslösevorrichtung vorgesehen sein. Dieser Verzögerungssensor weist zweckmäßigerweise eine in der horizontalen Ebene und/oder nach oben bewegbare und nur durch ein elektrisch leitendes Sollbruchelement gehaltene und dadurch an dieser Bewegung gehinderte Masse auf. Ab einer bestimmten Verzögerung oder Beschleunigung bricht das Sollbruchelement und löst den Funkalarm aus, z.B. bei einem Unfall oder bei einem starken Aufprall eines anderen Fahrzeugs auf das gesicherte parkende Fahrzeug. Auch in einem solchen Falle wird dann automatisch die Polizei per Funk über den Unfallort informiert.

Zum Ein- oder Ausschalten der Anlage dient zweckmäßigerweise ein Schlüsselschalter oder Codierschalter, der insbesondere ein magnetisch oder elektronisch codierter Schalter ist. Dieser Schlüsselschalter oder Codierschalter kann zweckmäßigerweise gleichzeitig als Betriebsschalter (Zündschlüssel) für das Fahrzeug ausgebildet oder in diesem enthalten sein. Hierdurch ist gewährleistet, daß beim Abziehen des Zündschlüssels automatisch die Anlage scharf geschaltet ist, so daß ein versehentliches Vergessen einer Scharfschaltung ausgeschlossen ist. Der Fahrzeuginhaber braucht auch keine separate Scharfschaltung der Alarmanlage vornehmen und steht auch nicht unter zeitlichem Druck beim Verlassen des Fahrzeugs, wie dies zum Teil bei bekannten Alarmanlagen der Fall ist. Ebenfalls muß er beim Wiederstarten des Fahrzeugs der Alarm- und Meldeanlage keine besondere Aufmerksamkeit widmen, da diese automatisch wieder ausgeschaltet wird.

Eine Ausnahme bilden zweckmäßigerweise lediglich ein Verzögerungssensor und ein Notschalter bzw. -taster, die auch im eingeschalteten Zustand des Betriebsschalters aktiviert bleiben, um einen Unfall bzw. Notfall melden zu können.

Zweckmäßigerweise sind wenigstens zwei Ortungs- und Sendeantennen an verschiedenen Stellen am Fahrzeug vorgesehen, damit bei einer möglichen Entdeckung und Beschädigung oder Entfernung durch den Einbrecher die Anlage weiterhin betriebsbereit bleibt.

In vorteilhafter Weise kann als Auslösevorrichtung auch eine vorgebbare Gebietsinformationen enthaltende Speichereinrichtung vorgesehen sein, deren Speicherinhalt ständig oder periodisch mit den Positionsdaten der Ortungsvorrichtung in einer Prüfeinrichtung verglichen wird, wobei bei Erkennung unerlaubter Gebiete die Signalvorrichtung aktiviert wird. Insbesondere bei Mietfahrzeugen kann dadurch ein erlaubter Aktionsbereich vorgegeben werden, um beispielsweise eine Verschiebung ins Ausland zu verhindern, sofern dies so vorgesehen ist. Stellt die Prüfeinrichtung eine Übereinstimmung von augenblicklichen Positionsdaten mit gespeicherten Positionsdaten unerlaubter Gebiete fest, so wird automatisch der Funkalarm ausgelöst, und das Fahrzeug kann möglicherweise noch vor der Grenze abgefangen werden. Zusätzlich kann noch die Steuerelektronik für den Motor des Fahrzeugs ausgeschaltet werden.

Als Speichereinrichtung eignet sich entweder ein auswechselbarer Speicher-Chip, wobei jeder Speicher-Chip mit bestimmten Gebietsinformationen versehen ist, oder die Speichereinrichtung ist als von außen programmierbarer Speicher-Chip ausgebildet, wobei dann der Vermieter jeweils entsprechende Daten von Gebieten einspeichern kann, die für das Fahrzeug nicht erlaubt sein sollen.

Die Prüfeinrichtung ist zweckmäßigerweise als digitaler Komparator ausgebildet.

Ausführungsbeispiele der Erfindung sind in der Zeichnung dargestellt und in der nachfolgenden Beschreibung näher erläutert. Es zeigen:
- Fig. 1: ein Blockschaltbild eines Ausführungsbeispiels der Alarm- und Meldeanlage,
- Fig. 2: einen Abreißmelder zur Einbruchsüberwachung eines Behälters (z.B. Handschuhfach, Motorhaube, Kofferraum und Wertbehälter) in einer Explosionsdarstellung,
- Fig. 3: die in Fig. 2 dargestellte Sollbruchplatte in der Draufsicht,
- Fig. 4: den in Fig. 2 dargestellten Abreißmelder im montierten Zustand,
- Fig. 5: den in Fig. 4 dargestellten Abreißmelder nach einer Gewalteinwirkung und gebrochener Sollbruchplatte,
- Fig. 6: einen Verzögerungssensor als Auslösevorrichtung in einer Schnittdarstellung,
- Fig. 7: den in Fig. 6 dargestellten Verzögerungssensor in einer Draufsicht von oben bei abgenommenem Gehäusedeckel und
- Fig. 8: ein gegenüber Fig. 1 modifiziertes Ausführungs- beispiel der Alarm- und Meldeanlage mit einer Speichereinrichtung für vorgebbare Gebietsinformationen.

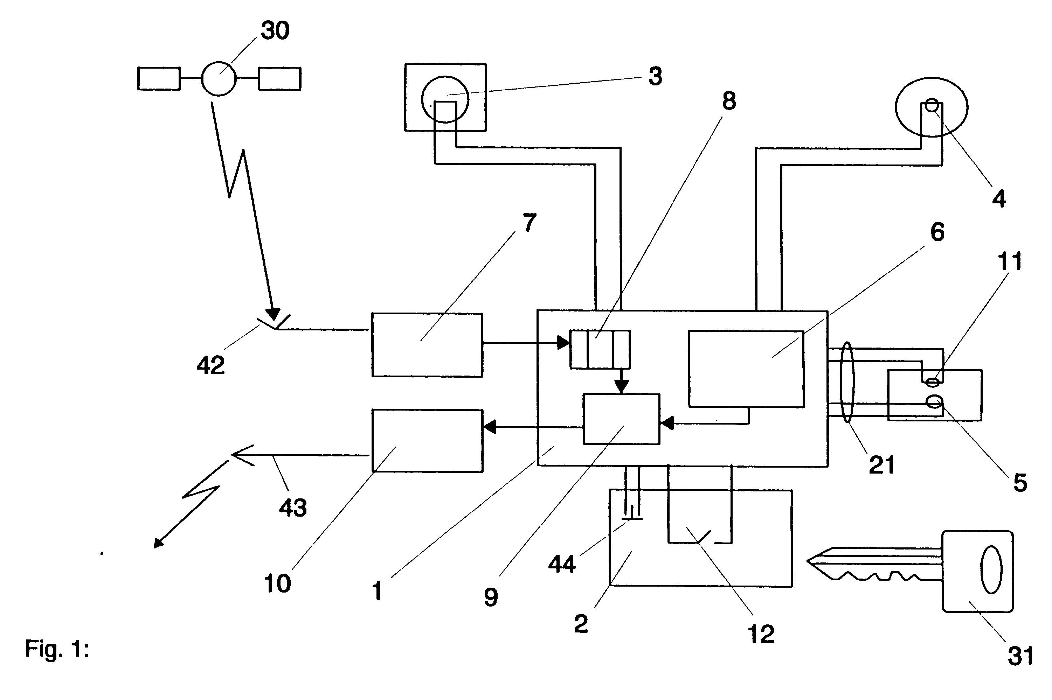

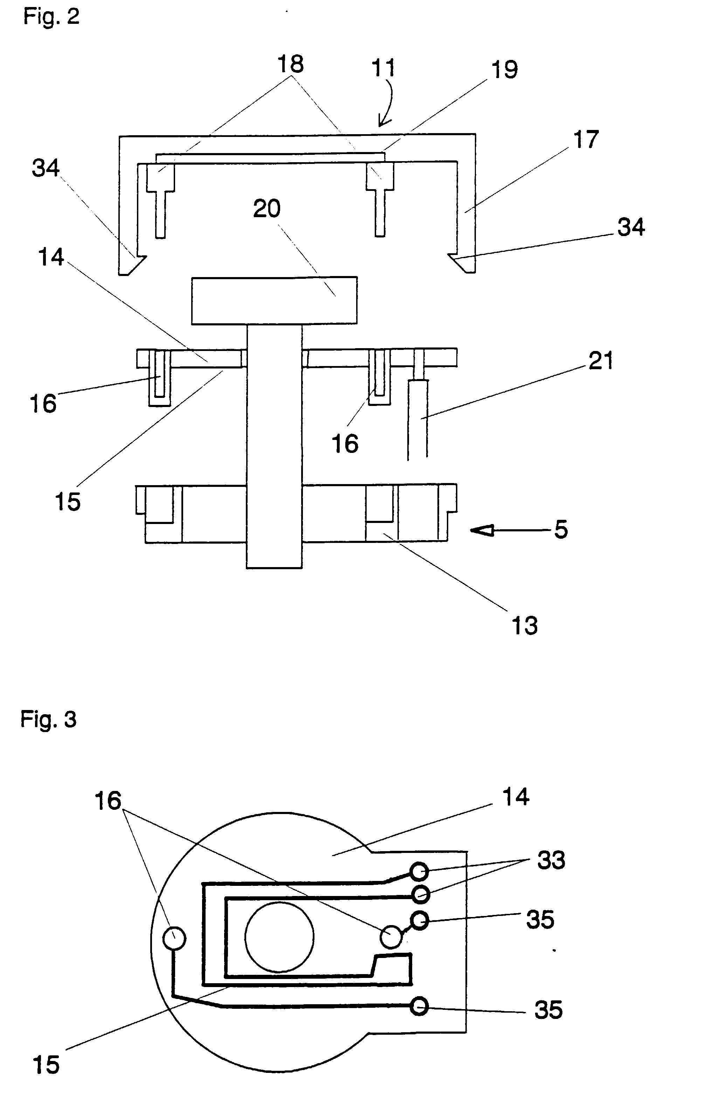

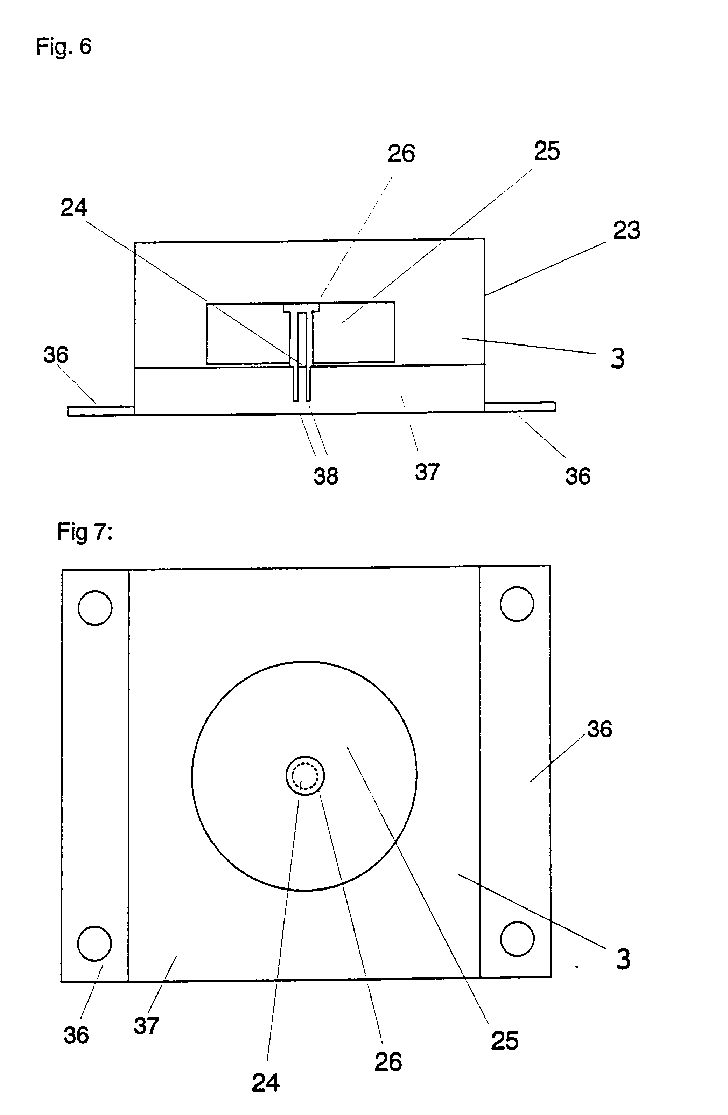

Bei dem in Fig. 1 dargestellten Blockschaltbild der Alarm-und Meldeanlage für Fahrzeuge sind an einer Meldezentrale 1 ein Zündschloß 2, mehrere Auslösevorrichtungen 3,4,5,11 zur Auslösung eines Alarms, eine Ortungsvorrichtung 7 für die Satellitenortung der jeweiligen Position und ein Funksender 10 angeschlossen. Die Auslösevorrichtung 3 ist in den Fig. 6 und 7 und die Auslösevorrichtungen 5 und 11 sind in den Fig. 2 bis 5 näher dargestellt und beschrieben.

Alle Auslösevorrichtungen 3,4,5, und 11 sind an eine Auswerteelektronik 6 in der Meldezentrale 1 in nicht näher dargestellter Weise angeschlossen. Eine derartige Auswerteelektronik 6 zur Überwachung von Leitungen ist bei Alarmanlagen allgemein bekannt, so daß auf eine nähere Beschreibung verzichtet werden kann. Das Prinzip besteht darin, daß ein Strom durch eine zu überwachende Leitung geschickt und der Stromfluß überwacht wird, der beispielsweise durch einen Widerstand in der Leitung bestimmt ist. Wird die Leitung durch Auslösung einer Auslösevorrichtung 3,4,5,11 unterbrochen oder kurzgeschlossen, so wird ein Auslösesignal für den Alarm erzeugt.

Die Positionsortung beruht auf dem bekannten existierenden Satelliten-Ortungssystem GPS (Global Positioning System), das jeweils die genauen Koordinaten des Standortes der empfangenden Ortungsvorrichtung 7 vermittelt, das die Signale von einem entsprechenden Satelliten 30 erhält. Eine derartige Ortungsvorrichtung 7 ist in Zusammenhang mit dem GP-System ebenfalls bekannt und im Handel erhältlich.

Die empfangenen Koordinaten werden einem Durchgangsspeicher 8 in der Meldezentrale 1 zugeführt, der nach Art eines Schieberegisters die jeweils aktuellen Daten in einen aktuellen Speicher aufnimmt und die zuvor dort gespeicherten Daten um einen Speicherplatzbereich weiterverschiebt, bis sie nach dem letzten vorhandenen Speicherbereich durch Überschreiben gelöscht werden. Im Prinzip genügen hier zwei Speicherbereiche. Der Durchgangsspeicher 8 ist mit einer Standort-Überwachungseinrichtung 9 verbunden, in der die jeweils aktuelle Position mit der zuvor gespeicherten Information verglichen wird. Die Einspeicherung der jeweiligen Positionen erfolgt in einem fest vorgegebenen Zeitraster, z.B. alle 10 Sekunden. Zum Vergleich der Positionsdaten enthält die Standort-Überwachungseinrichtung 9 z.B. einen digitalen Komparator. Wird eine definierte Diskrepanz zwischen nacheinander gespeicherten Positionen festgestellt, so erzeugt die Standort-Überwachungseinrichtung 9 ein Alarmauslösesignal, das genauso wie ein Signal der Auswerteelektronik 6 dem Funksender 10 zugeführt wird. Das Alarmauslösesignal der Auswerteelektronik 6 ist jedoch zunächst der Standort-Überwachungseinrichtung 9 zugeführt, da von dieser im Alarmfall noch die Positionsdaten dem Funksender 10 zugeführt werden müssen.

Die Erzeugung der Alarmauslösesignale und die entsprechende Aktivierung des Funksenders 10 erfolgen selbstverständlich nur bei eingeschalteter bzw. scharf geschalteter Alarm-und Meldeanlage bzw. Meldezentrale 1. Eine Ausnahme bildet das Signal der Auslösevorrichtung 3, wie später noch erläutert wird. Durch den Funksender 10 wird im Alarmfall ein Alarmsignal an eine hilfeleistende Stelle abgesandt, z.B. an einen Wachdienst zur Benachrichtigung der Polizei und gegebenenfalls der Ambulanz oder zur direkten Benachrichtigung dieser Stationen. Das Funksignal enthält zum einen die Information, ob ein Unfall oder ein Diebstahl vorliegt, und darüber hinaus die jeweilige Position des Fahrzeugs, die sich im Falle eines Fahrzeugdiebstahls auch laufend verändern kann. Hierdurch kann bei einem Diebstahlalarm jede Standortveränderung, z.B. der Abtransport eines Pkw auf einem Transporter, nachvollzogen und beobachtet werden.

Besteht standortbedingt keine Verbindung zum Satelliten, z.B. in einer Tiefgarage, so wird die letzte Standortbestimmung im Durchgangsspeicher 8 festgehalten und einer eventuellen Alarmmeldung angefügt. Wird das Fahrzeug entwendet, so tritt nach Verlassen der Tiefgarage wieder eine Satellitenverbindung auf, und auf Grund der Standortveränderung wird der Alarm in der beschriebenen Weise ausgelöst.

Das Einschalten bzw. Scharfschalten der Alarm- und Meldeanlage erfolgt über das Zündschloß 2, in dem ein entsprechender Schalter 12 zum Ein- und Ausschalten der Anlage enthalten ist. Wird ein in das Zündschloß 2 passender Zündschlüssel 31 abgezogen, so wird der Schalter 12 geschlossen, und die Alarm- und Meldeanlage ist aktiviert und kann in den zuvor beschriebenen Fällen den Funkalarm auslösen. Bei korrekt betätigtem Zündschlüssel 31 ist der Schalter 12 dagegen geöffnet und die Anlage deaktiviert. Diese Deaktivierung bedeutet jedoch lediglich, daß eine Standortveränderung und eine Betätigung der Auslösevorrichtungen 5 und 11 nicht mehr zur Auslösung eines Funkalarms führen. Dagegen bleiben die Auslösevorrichtungen 3 (Auslösung bei einem Unfall) und die Auslösevorrichtung 4 (Notschalter) nach wie vor aktiviert.

Das Aktivieren der Alarm- und Meldeanlage nach dem Abziehen und/oder Drehen des Zündschlüssels bis zu einer vorgesehenen Position kann auch gleichzeitig zur Verriegelung von gesicherten Behältern, wie den Kofferraum, das Handschuhfach, die Motorhaube oder einen Wertbehälter im Kofferraum oder an einer anderen Stelle, führen. Entsprechend kann dies nach dem Einstecken und Drehen des Zündschlüssels bis zu der vorgesehenen Stufe neben der Deaktivierung der Anlage auch zu einer Entriegelung der genannten Behälter führen.

Anstelle eines einfachen Zündschlüssels kann dieser auch beispielsweise zum Ein- und Ausschalten der Alarm- und Meldeanlage mit einem codierten Magnetstreifen oder einer elektronischen Codierung versehen sein. Ein nachgefräster Zündschlüssel könnte in diesem Falle nicht zu einer Ausschaltung der Alarm- und Meldeanlage benutzt werden. Selbstverständlich kann anstelle des ohnehin vorhandenen Zündschlosses auch ein separater Codierschalter od.dgl. zum Ein- und Ausschalten der Alarm- und Meldeanlage vorgesehen sein.

Wird das Auto beispielsweise in einem Autoreisezug auf Veranlassung des Inhabers transportiert oder nach einem Unfall abgeschleppt, so ist üblicherweise bzw. häufig der Zündschlüssel abgezogen, und die Standortveränderung des Fahrzeugs würde zu einem Funkalarm führen. Um dies zu verhindern, ist ein Schalter 44 vorgesehen, über den die Aktivierung oder Deaktivierung der Anlage bestätigt werden muß, damit sie wirksam bzw. unwirksam wird. In den genannten Fällen (Autoreisezug, Abschleppen) wird dieser Schalter 44, der z.B. ein Tastschalter sein kann, nach dem Abziehen des Zündschlüssels je nach Ausführung bestätigt oder nicht betätigt. Damit in den übrigen Fällen eine Bestätigung vom Fahrer nicht vergessen wird, kann nach dem Abziehen des Zündschlüssels an die Bestätigung akustisch und/oder optisch erinnert werden.

Die Auslösevorrichtung 4 ist als Notruftaste ausgebildet, die versteckt im Wirkungsbereich des Fahrers des Fahrzeugs angeordnet wird. Bei Überfällen auf den Fahrer, insbesondere Taxifahrer, kann dieser diese als Notruftaste ausgebildete Auslösevorrichtung 4 betätigen, so daß der Funkalarm ausgelöst wird, ohne daß der Täter dies bemerkt. Durch Verzögerung des Fahrers kann dann versucht werden, Zeit zu gewinnen, um der über den Funkalarm alarmierten Polizei Gelegenheit zu geben, den Ort des Überfalls zu erreichen. Auch wenn der Fahrer gezwungen werden sollte, weiterzufahren, könnte die Veränderung des Standorts des Fahrzeugs über den Funkkontakt ständig beobachtet werden. Diese Auslösevorrichtung 4 ist immer aktiv, unabhängig davon, ob die Alarm- und Meldeanlage eingeschaltet ist oder nicht.

Die als Abreißmelder ausgebildeten Auslösevorrichtungen 5 und 11 sind in den Fig. 2 bis 5 näher dargestellt. Eine Befestigungsschraube 20 erstreckt sich durch zwei aneinander zu befestigende Teile 22, bei denen es sich beispielsweise um ein an einem Karosserieblech zu befestigendes Scharnier oder Halteblech eines Schlosses oder eine Verschließeinrichtung handeln kann, durch die der Kofferraumdeckel, die Motorhaube, der Handschuhfachdeckel od.dgl. befestigt sind. Darüber hinaus kann es sich auch um das Bodenblech eines Sicherungsbehälters handeln, der am Kofferraumbodenblech oder am Kofferraumseitenbleich fixiert wird. Generell kann dieser Abreißmelder überall dort eingesetzt werden, wo die Gefahr besteht, daß zwei aneinander mittels der Befestigungsschraube 20 fixierter Teile gewaltsam getrennt werden sollen. Im nicht zugänglichen Innenbereich ist die Befestigungsschraube 20 durch eine Mutter 32 fixiert. Zwischen dem Schraubenkopf der Befestigungsschraube 20 und den beiden Teilen 22 ist die als Abreißmelder ausgebildete Auslösevorrichtung 5 angeordnet. Diese besteht im wesentlichen aus einer Sollbruchplatte 14, durch die sich die Befestigungsschraube 20 erstreckt, und einem rohrartigen Abstandsteil 13, durch das die Sollbruchplatte 14 in einem Abstand a von den Teilen 22 gehalten wird, wenn die Befestigungsschraube 20 fixiert ist. An der vom Schraubenkopf der Befestigungsschraube 20 abgewandten Seite der Sollbruchplatte 14 ist ein Stromleiter 15 so verlegt, daß er beim Brechen der Sollbruchplatte 14 zwangsläufig aufgetrennt wird. Dieser Stromleiter 15 ist über zwei Anschlüsse 33 mit einem Kabel 21 verbunden, das gemäß Fig. 1 an der Auswerteelektronik 6 angeschlossen ist. In diesen Stromleiter 15 ist in nicht dargestellter üblicher Weise ein Widerstand (z.B. Linienendwiderstand) zur definierten Stromüberwachung geschaltet.

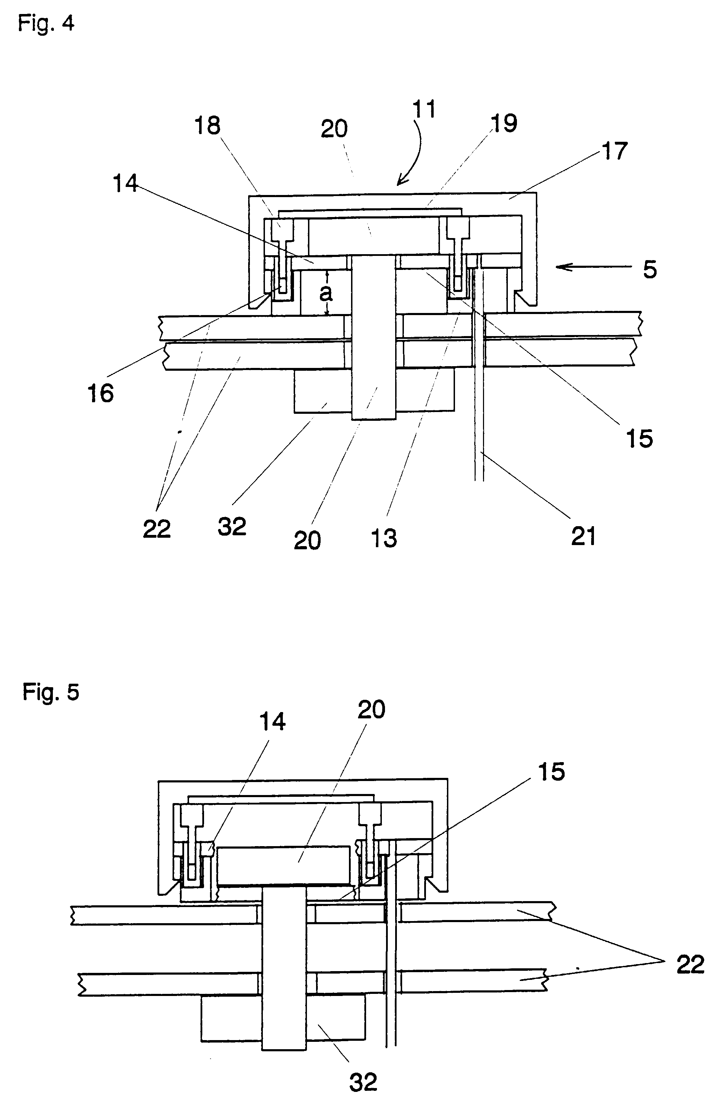

Bei einer Gewalteinwirkung auf die durch den Abreißmelder gesicherten Teile 22 bricht die Sollbruchplatte 14, und der Funkalarm wird ausgelöst, wie dies im Zusammenhang mit Fig. 1 bereits beschrieben wurde. Der Schraubenkopf der Befestigungsschraube 20 kann nun in das Abstandsteil 13 eindringen und verankert sich wieder an den zu befestigenden Teilen 22, die allerdings nunmehr gemäß Fig. 5 um den Abstand a gegeneinander bewegt werden können. Der Täter muß nun erneut zum Aufbrechen ansetzen und jetzt einen erheblich größeren Widerstand überwinden. Dies verschafft der Polizei die notwendige Zeit, den Tatort zu erreichen. Zusätzlich gerät der Täter jedoch auch unter Zeitdruck und sieht sich mit einer neuen Situation konfrontiert, die sein Vorhaben behindert.

Um zu verhindern, daß beispielsweise bei leicht zugänglichen Befestigungsschrauben 20 versucht werden könnte, diese selbst zu beseitigen, um so eine Auslösung durch den Abreißmelder zu verhindern, ist ein Schutzdeckel 17 vorgesehen, der auf das Abstandsteil 13 aufgesteckt und mittels Rastnasen 34 verrastet wird. Dieser Schutzdeckel 17 deckt den Schraubenkopf der Befestigungsschraube 20 und die Sollbruchplatte 14 ab. Innerhalb dieses Schutzdeckels 17 sind zwei elektrische Stecker 18 vorgesehen, die über einen im Schutzdeckel 17 verlegten Stromleiter 19 miteinander verbunden sind. Beim Aufstecken des Schutzdeckels 17 auf den Abreißmelder werden diese Stecker 18 in entsprechende Buchsen 16 der Sollbruchplatte 14 eingesteckt. Zwei Anschlüsse 35 auf der Sollbruchplatte 14 sind einerseits mit den beiden Buchsen 16 und andererseits über das Kabel 21 gemäß Fig. 1 mit der Auswerteelektronik 6 verbunden.

Wird unberechtigterweise der Schutzdeckel 17 entfernt, so wird die elektrische Verbindung zwischen den Anschlüssen 35 unterbrochen und eine bloße Funkmitteilung oder gleich ein Funkalarm ausgelöst.

Alternativ zu dem in Fig. 2 bis 5 dargestellten Ausführungsbeispiel kann auch eine Sollbruchstelle ohne Stromleiter vorgesehen sein. Durch den sich beim Brechen der Sollbruchstelle vergrößernden Abstand zwischen den Teilen 22 wird ein Schalter betätigt, der als Auslösevorrichtung 5 gemäß Fig. 1 dann vorgesehen ist.

Die als Verzögerungssensor ausgebildete Auslösevorrichtung 3 ist in den Fig. 6 und 7 dargestellt. Auf einer mit Befestigungsstreifen 36 versehenen Basisplatte 37 ist ein kreiszylindrischer Massekörper 25 angeordnet. Dabei bildet die Basisplatte 37 zusammen mit einer schematisch dargestellten Abdeckung 23 ein Gehäuse für den Massekörper 25. Zwei elektrische Anschlüsse 38 in der Basisplatte 37 sind über einen Stromleiter 26 miteinander verbunden, der im Massekörper 25 verläuft. Er kann selbstverständlich prinzipiell auch außen am Massekörper 25 verlaufen. Der Massekörper 25 ist über eine Sollbruchstelle 24 mit der Basisplatte 37 verbunden. Die beiden Anschlüsse 38 der Auslösevorrichtung 3 sind gemäß Fig. 1 mit der Auswerteelektronik 6 verbunden.

Durch eine horizontale Anbringung der als Verzögerungssensor ausgebildeten Auslösevorrichtung 3 im Fahrzeug wird gewährleistet, daß die von der Bodenseite her auf den Massekörper 25 einwirkenden Kräfte kein Abreißen der Sollbruchstelle 24 bewirken. Hierdurch ist gewährleistet, daß bei rauhem Fahrbetrieb und beispielsweise beim Durchschlagen der Achse ein Fehlalarm vermieden wird. Bei einem Aufprall des Fahrzeugs auf ein Hindernis oder bei einem Aufprall eines anderen Fahrzeugs auf das vorliegende Fahrzeug treten in horizontaler Richtung wirkende Kräfte auf, die ein Abscheren der Sollbruchstelle 24 und damit ein Auftrennen des Stromleiters 26 bewirken. Hierdurch wird in der bereits beschriebenen Weise ein Funkalarm ausgelöst. Hierdurch kann beispielsweise ein schwerer Verkehrsunfall automatisch gemeldet werden, wobei die Unfallmeldung auch den Unfallort bezeichnet.

Falls der Lenker des Unfallfahrzeugs keine Hilfe benötigt, kann er beispielsweise durch Drehen und Abziehen des Zündschlüssels eine derartige Unfallmeldung verhindern, die in diesem Falle erst nach einer bestimmten Zeitverzögerung abgesandt würde. Ein akustisches Signal kann ihn daran erinnern. Bei einer derartigen Ausführung wäre die Auswerteelektronik 6 für die Auslösevorrichtung 3 nur dann in Bereitschaft, wenn sich der Zündschlüssel in der Fahrbetriebsstellung befindet.

Bei einem unfallbedingten Überschlag des Fahrzeugs kann sich der Massekörper 25 auch senkrecht von der Basisplatte 37 nach dem Abreißen der Sollbruchstelle 24 bzw. des Stromleiters 26 ablösen. In einer alternativen Ausführungsform können auch die Sollbruchstelle 24 und der Stromleiter 26 als ein elektrisch leitendes Sollbruchelement ausgebildet sein.

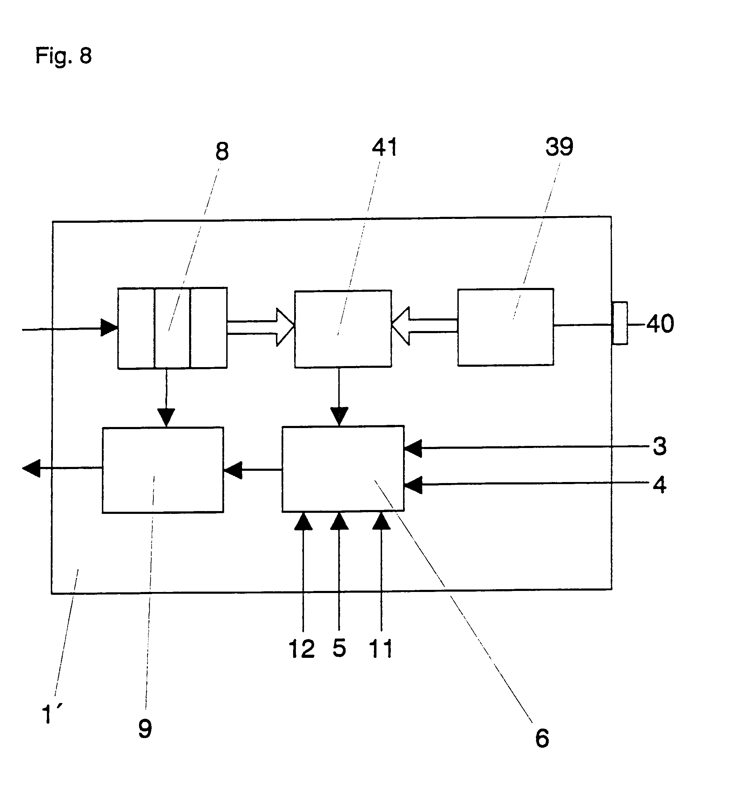

Das in Fig. 8 dargestellte Ausführungsbeispiel der Alarm- und Meldeanlage beinhaltet eine Abwandlung der in Fig. 1 dargestellten Meldezentrale 1, die nunmehr mit dem Bezugszeichen 1' versehen ist. Die äußere Beschaltung dieser Meldezentrale 1' entspricht der der Meldezentrale 1, so daß lediglich die entsprechenden Anschlüsse angedeutet sind. Innerhalb der Meldezentrale 1' sind gleiche oder gleichwirkende Bauteile und Baugruppen mit denselben Bezugszeichen versehen und nicht nochmals beschrieben.

Zusätzlich zur Meldezentrale gemäß Fig. 1 ist nunmehr ein Speicher-Chip 39 vorgesehen, der über eine Schnittstelle 40 von außen mit Gebietsinformationen entsprechenden Daten ladbar ist. Dieser Speicher-Chip 39 ist mit einer im wesentlichen als digitaler Komparator ausgebildeten Prüfeinrichtung 41 verbunden, deren Vergleichseingänge mit Ausgängen des Durchgangsspeichers 8 verbunden sind. In dieser Prüfeinrichtung 41 werden ständig die augenblicklichen Positionsdaten des Fahrzeugs, die im Durchgangsspeicher 8 vorliegen, mit den Gebietsinformationen im Speicher-Chip 39 verglichen. Liegt eine Übereinstimmung vor, so wird ein Auslösesignal der Auswerteelektronik 6 zugeführt, durch das der Funkalarm ausgelöst und eventuell auch die Steuerelektronik für den Motor des Fahrzeugs ausgeschaltet wird. Zusätzlich kann eine akustische Vorwarnung vorgesehen sein.

In den Speicher-Chip 39 können Daten von Gebieten eingespeichert werden, in denen der Betrieb des Fahrzeugs nicht gestattet sein soll. Beispielsweise kann ein Autovermieter mit seinem Kunden einen Mietvertrag schließen, in dem die Nutzung nur in einem bestimmten Gebiet erlaubt ist. Hierdurch soll verhindert werden, daß Mietfahrzeuge mißbräuchlich in bestimmte ausländische Gebiete verschoben werden. Erreicht das Fahrzeug das nicht erlaubte Gebiet, so wird automatisch der Funkalarm ausgelöst. Das unerlaubte Gebiet kann sich von der Grenze aus noch einige Kilometer ins Inland erstrecken, so daß noch Zeit bleibt, die Grenzkontrollen zu informieren, damit das Fahrzeug aufgehalten wird.

Der Speicher-Chip 39 kann individuell mit Gebietsinformationen geladen werden, deren entsprechende Gebiete für den Benutzer des Fahrzeugs ausgeschlossen werden sollen. Es ist selbstverständlich auch möglich, verschiedene mit Gebietsinformationen versehene Speicher-Chips durch Umstecken auszutauschen. Um hier einen Mißbrauch zu verhindern, muß die Meldezentrale 1 bzw. 1' selbstverständlich auch entsprechend gesichert sein, z.B. mittels eines Abreißmelders oder eines beim Aufbrechen abreißenden Sicherungsdrahtes.

Die in Fig. 1 dargestellte Antenne 42 für die Satellitenortung hat derzeit etwa die Größe einer größeren Münze und kann dadurch leicht beispielsweise in den Seitenspiegeln unsichtbar integriert werden. Um eine gewaltsame Deaktivierung der Alarm- und Meldeanlage durch Zerstörung der Antenne zu verhindern, können mehrere Antennen an mehreren Stellen des Fahrzeugs versteckt angeordnet sein. Dasselbe gilt für eine Antenne 43 des Funksenders 10.

In Ergänzung der Auslösevorrichtung 5 zur Sicherung von Scharnier- und Haltebereichen kann auch noch ein Flächenschutz realisiert werden, wie er z.B. in der europäischen Patentanmeldung Nr. 90 10 45 95.5 beschrieben ist. Hierbei werden z.B. Kofferraumdeckel und Motorhaube mit einem eng verlegten Stromleiter versehen, der bei einem Aufbruchsversuch abreißt.

## Patentansprüche

1. Alarm- und Meldeanlage für Fahrzeuge, mit wenigstens einer bei einem Einbruch, Diebstahl und/oder Unfall auslösbaren, eine Signalvorrichtung aktivierenden Auslösevorrichtung, und mit einer die jeweilige Position des Fahrzeugs über Satellitenortung in bestimmten zeitlichen Intervallen bestimmenden Ortungsvorrichtung (7), wobei die Signalvorrichtung mit einem beim Ansprechen der Auslösevorrichtung (3, 4, 5, 9, 11) Signale absendenden Funksender (10) versehen ist, die die augenblickliche oder zuletzt bestimmte Position des Fahrzeuges beinhalten, dadurch gekennzeichnet, daß als Auslösevorrichtung (9) Mittel zum Vergleich von zeitlich nacheinander erfaßten Positionen des Fahrzeuges und zur Aktivierung der Signalvorrichtung bei Erkennung einer Abweichung der erfaßten Positionen bei aktivierter Anlage vorgesehen sind.

2. Anlage nach Anspruch 1, dadurch gekennzeichnet, daß eine Speichereinrichtung (8) zum Abspeichern wenigstens der zuletzt bestimmten Position des Fahrzeugs vorgesehen ist.

3. Anlage nach Anspruch 1 oder 2, dadurch gekennzeichnet, daß der Funksender (10) auf Empfangseinrichtungen von Hilfsdiensten abgestimmt ist.

4. Anlage nach einem der vorhergehenden Ansprüche, dadurch gekennzeichnet, daß als zusätzliche Auslösevorrichtung (5) ein beim Abreißen oder Kurzschließen die Signalvorrichtung aktivierender Alarmdraht (15) vorgesehen ist, der im Schließ- oder Scharnierbereich wenigstens eines zu sichernden Behälters oder Raums und/oder zur Sicherung einer Behälterwandung diese in engen Abständen überdeckend angeordnet ist.

5. Anlage nach einem der Ansprüche 1 bis 4, dadurch gekennzeichnet, daß als zusätzliche Auslösvorrichtung (5) ein beim gewaltsamen Öffnen eines zu sichernden Behälters oder Raums auslösender elektrischer Schalter vorgesehen ist.

6. Anlage nach Anspruch 4 oder 5, dadurch gekennzeichnet, daß der Behälter oder Raum der Motorraum und/oder der Koffe raum und/oder das Handschuhfach und oder ein Wertbehälter im Kofferraum ist.

7. Anlage nach einem der Ansprüche 4 bis 6, dadurch gekenn zeichnet, daß wenigstens eine zur Verankerung des Schließ- oder Scharnierbereichs dienende Schraube (20) oder ein Bolzen an einer Sollbruchstelle (14) abgestützt ist, die mit einem Alarmdraht (15) versehen ist oder deren Brechen den Schalter auslöst.

8. Anlage nach Anspruch 7, dadurch gekennzeichnet, daß zwischen der Sollbruchstelle (14) und den beiden durch die Schraube (20) oder den Bolzen verbundenen Teilen (22) ein beim Brechen der Sollbruchstelle (14) der Schraube (20) einen Spielraum verschaffender Abstand (13) vorgesehen ist.

9. Anlage nach Anspruch 7 oder 8, dadurch gekennzeichnet, daß die Schraube (20) oder der Bolzen Bestandteil eines die zusätzliche Auslösevorrichtung (5) bildenden Abreißmelders sind, der mit einer die Schraube (20) abdeckenden Abdeckeinrichtung (17) versehen ist, durch die zwei elektrische Kontakte (16) miteinander verbindbar sind und die als weitere Auslösevorrichtung (11) ausgebildet ist.

10. Anlage nach einem der vorhergehenden Ansprüche, dadurch gekennzeichnet, daß ein versteckt angeordneter Notschalter als zusätzliche Auslösevorrichtung (4) vorgesehen ist.

11. Anlage nach einem der vorhergehenden Ansprüche, dadurch gekennzeichnet, daß ein bei einer vorgebbaren Verzögerung ansprechender Verzögerungssensor als zusätzliche Auslösevorrichtung (3) vorgesehen ist.

12. Anlage nach Anspruch 11, dadurch gekennzeichnet. daß der als zusätzliche Auslösevorrichtung (3) ausgebildete Verzögerungssensor eine in der horizontalen Ebene und/oder nach oben bewegbare und durch ein Sollbruchelement (24) gehaltene und dadurch an dieser Bewegung gehinderte Masse (25) aufweist, die mit einem beim Brechen des Sollbruchelements (24) reißenden Stromleiter (26) versehen ist.

13. Anlage nach Anspruch 12, dadurch gekennzeichnet, daß die Masse (25) auf einer festen horizontalen Auflagefläche (37) aufliegt.

14. Anlage nach einem der vorhergehenden Ansprüche, dadurch gekennzeichnet, daß sie durch einen Schlüsselschalter (12) oder Codierschalter ein- und ausschaltbar ist.

15. Anlage nach Anspruch 14, dadurch gekennzeichnet, daß der Codierschalter ein magnetisch oder elektronisch codierter Schalter ist.

16. Anlage nach Anspruch 14 oder 15, dadurch gekennzeichnet, daß der Schlüsselschalter (12) oder Codierschalter gleichzeitig als Betriebsschalter (2) für das Fahrzeug ausgebildet oder in diesem enthalten ist.

17. Anlage nach einem der Ansprüche 14 bis 16, dadurch gekennzeichnet, daß der Schlüsselschalter (12) mit einem zusätzlichen Betätigungsschalter (44) zum Ein- oder Ausschalten der Anlage in Wirkverbindung steht.

18. Anlage nach Anspruch 17, dadurch gekennzeichnet, daß eine an die Betätigung des Betätigungsschalters erinnernde akustische Meldevorrichtung vorgesehen ist.

19. Anlage nach einem der Ansprüche 16 bis 18, dadurch gekennzeichnet, daß sie im ausgeschalteten Zustand des Betriebsschalters (2) eingeschaltet und im eingeschalteten Zustand des Betriebsschalters (2) deaktiviert ist, wobei die Alarm- und Meldeanlage im Falle eines angeschlossenen Verzögerungssensors oder Notschalters als zusätzliche Auslösevorrichtung (3,4) bei einem Auslösesignal dieses Verzögerungssensors oder Notschalters im eingeschalteten Zustand des Betriebsschalters (2) aktivierbar ist.

20. Anlage nach einem der vorhergehenden Ansprüche, dadurch gekennzeichnet, daß wenigstens zwei Ortungs- und Sendeantennen (42,43) an verschiedenen Stellen im Fahrzeug vorgesehen sind.

21. Anlage nach einem der vorhergehenden Ansprüche, dadurch gekennzeichnet, daß als us zusätzliche Auslösevorrichtung (39,41) eine vorgebbare Gebietsinformationen enthaltende Speichereinrichtung (39) vorgesehen ist, deren Speicherinhalt ständig oder periodisch mit den Positionsdaten der Ortungsvorrichtung (7) in einer Prüfeinrichtung (41) verglichen wird, wobei bei Erkennung unerlaubter Gebiete die Signalvorrichtung aktiviert wird.

22. Anlage nach Anspruch 21 dadurch gekennzeichnet, daß zusätzliche Mittel zur Deaktivierung einer Steuerelektronik für den Motor des Fahrzeugs vorgesehen sind.

23. Anlage nach Anspruch 21 oder 22 dadurch gekennzeichnet, daß die Speichereinrichtung (39) als auswechselbarer Speicher-Chip ausgebildet ist.

24. Anlage nach Anspruch 21 oder 22, dadurch gekennzeichnet, daß die Speichereinrichtung (39) als von außen programmierbarer Speicher-Chip ausgebildet ist.

25. Anlage nach einem der Ansprüche 21 bis 24, dadurch gekennzeichnet, daß die Prüfeinrichtung (41) im wesentlichen als digitaler Komparator ausgebildet ist.

## Claims

1. Alarm and message system for vehicles with at least one triggering device activating a signal device in the event of a break-in, theft and/or accident and with a locating device (7) determining the position of the vehicle by way of satellite location in specific time intervals, the signal device being provided with a radio transmitter (10) transmitting signals for the current or last determined position of the vehicle at the response of the triggering device (3, 4, 5, 9, 11), characterized in that the triggering device (9) consists of means for comparing positions of the vehicle detected consecutively and of means for activating the signal device on detection of a deviation of the positions detected while the system is activated.

2. System according to Claim 1, characterized in that a memory (8) for the storage of at least the last determined position of the vehicle is provided.

3. System according to Claim 1 or 2, characterized in that the radio transmitter (10) is tuned to receiving devices of rescue services.

4. System according to any of the preceding claims, characterized in that an additional triggering device (5) is provided in the form of an alarm wire (15) activating the signal device in response to interruption or short-circuit, this being located in the closing or hinge area of a container or compartment to be secured and/or closely covering the walls of a container to be secured.

5. System according to any of Claims 1 to 4, characterized in that an additional triggering device (5) is provided in the form of an electric switch responding to the opening by force of a container or compartment to be secured.

6. System according to Claim 4 or 5, characterized in that the container or compartment is the engine compartment and/or the luggage compartment and/or the glove compartment and/or a container for valuables located in the luggage compartment.

7. System according to any of Claims 4 to 6, characterized in that at least one screw (20) anchoring the closing or hinge area or a bolt is supported on a predetermined breaking point (14) provided with an alarm wire (15) or triggering the switch on breaking.

8. System according to Claim 7, characterized in that a gap (13) is provided between the predetermined breaking point (14) and the two parts (22) connected by the screw (20) or the bolt to create a clearance for the screw (20) following the breaking of the predetermined breaking point.

9. System according to Claim 7 or 8, characterized in that the screw (20) or the bolt is a part of a break detector forming the additional triggering device (5), a cover (17) for the screw (20) being provided, by means of which two electrical contacts (16) can be connected and which forms a further triggering device (11).

10. System according to any of the preceding claims, characterized in that a hidden emergency switch is provided as an additional triggering device (4).

11. System according to any of the preceding claims, characterized in that a delay sensor responding to a presettable delay is provided as an additional triggering device (3).

12. System according to Claim 11, characterized in that the delay sensor forming the additional triggering device (3) has a mass (24) movable in the horizontal plane and/or upwards and held by a preset breaking element (24) preventing its movement, said mass being provided with a conductor (26) tearing when the preset breaking element breaks.

13. System according to Claim 12, characterized in that the mass (25) is supported on a fixed horizontal bearing surface (37).

14. System according to any of the preceding claims, characterized in that it can be switched on and off with a key switch (12) or code switch.

15. System according to Claim 14, characterized in that the code switch is encoded magnetically or electronically.

16. System according to Claim 14 or 15, characterized in that the key switch (12) or code switch is also designed as the operating switch (2) for the vehicle or incorporated therein.

17. System according to any of Claims 14 to 16, characterized in that the key switch (12) is operatively connected to an additional actuating switch (44) for switching the system on and off.

18. System according to Claim 17, characterized in that an acoustic message device indicating the operation of the actuating switch is provided.

19. System according to any of Claims 16 to 18, characterized in that it is activated in the off-position of the operating switch (2) and deactivated in the on-position of the operating switch (2), the alarm and message system, if a delay sensor or emergency switch is connected, being capable of activation in the on-position of the operating switch (2) as an additional triggering device (3, 4) in response to a triggering signal of the delay sensor or emergency switch.

20. System according to any of the preceding claims, characterized in that at least two locating and transmitting antennae (42, 43) are provided at various points in the vehicle.

21. System according to any of the preceding claims, characterized in that a memory (39) containing presettable area information is provided as an additional triggering device (39, 41), the contents of the memory being continuously or periodically compared with the position data of the locating device (7) in a checking device (41) and the signal device being activated on detection of prohibited areas.

22. System according to Claim 21, characterized in that additional means for deactivating an electronic control unit for the engine of the vehicle are provided.

23. System according to Claim 21 or 22, characterized in that the memory (29) is designed as a replaceable memory chip.

24. System according to Claim 21 or 22, characterized in that the memory (39) is designed as an externally programmable memory chip.

25. System according to any of Claims 21 to 24, characterized in that the checking device (41) is essentially designed as a digital comparator.

## Revendications

1. Système d'alarme et de signalisation pour véhicules, comportant au moins un dispositif de déclenchement activant un dispositif de signalisation, déclenchable en cas d'effraction, et de vol et/ou d'accident, et comportant un dispositif de localisation (7) déterminant la position respective du véhicule par le repérage par satellite dans des intervalles de temps déterminés, le dispositif de signalisation étant pourvu d'un émetteur radio (10) émettant des signaux lors de l'intervention du dispositif de déclenchement (3, 4, 5, 9, 11), qui contiennent la position instantanée ou déterminée en dernier du véhicule, caractérisé en ce que sont prévus comme dispositif de déclenchement (9) des moyens destinés à comparer des positions enregistrées successivement dans le temps, du véhicule et destinés à l'activation du dispositif de signalisation en cas de détection d'un écart des positions enregistrées lorsque le système est activé.

2. Système selon la revendication 1, caractérisé en ce qu'il est prévu un système à mémoire (8) pour la mémorisation d'au moins la position déterminée en dernier du véhicule.

3. Système selon la revendication 1 ou 2, caractérisé en ce que l'émetteur radio (10) est accordé sur des dispositifs de réception de services auxiliaires.

4. Système selon l'une des revendications précédentes, caractérisé en ce que comme dispositif de déclenchement (5) supplémentaire il est prévu un fil d'alarme (15) activant le dispositif de signalisation, en cas d'arrachage ou de court-circuit, qui est placé dans la zone de fermeture ou de charnière d'au moins un conteneur ou un volume à protéger et/ou pour la protection d'une paroi de conteneur recouvrant celle-ci à intervalles étroits.

5. Système selon l'une des revendications 1 à 4, caractérisé en ce que comme dispositif de déclenchement (5) supplémentaire il est prévu un interrupteur électrique se déclenchant lors d'une ouverture forcée d'un conteneur ou d'un volume à protéger.

6. Système selon la revendication 4 ou 5, caractérisé en ce que le conteneur ou le volume est l'enceinte du moteur et/ou le coffre et/ou la boîte à gants et/ou un coffret à valeurs dans le coffre.

7. Système selon l'une des revendications 4 à 6, caractérisé en ce qu'au moins une vis (20), servant à l'ancrage de la zone de fermeture ou de charnière ou un boulon est soutenu en un point de rupture (14), qui est pourvu d'un fil d'alarme (15) ou dont la rupture déclenche un interrupteur.

8. Système selon la revendication 7, caractérisé en ce qu'entre le point de rupture (14) et les deux parties (22), reliées par la vis (20) ou le boulon, il est prévu une distance (13) réalisant un jeu, lors de la rupture du point de rupture (15) de la vis (20).

9. Système selon la revendication 7 ou 8, caractérisé en ce que la vis (20) ou le boulon fait partie intégrante d'un avertisseur d'arrachage, formant le dispositif de déclenchement (5) supplémentaire, qui est pourvu d'un dispositif de couverture (17) recouvrant la vis (20), par lequel deux contacts électriques (16) peuvent être reliés entre eux et qui est conformé en autre dispositif de déclenchement (11).

10. Système selon l'une des revendications précédentes, caractérisé en ce qu'il est prévu comme dispositif de déclenchement (4) supplémentaire un interrupteur d'urgence dissimulé.

11. Système selon l'une des revendications précédentes, caractérisé en ce qu'il est prévu comme dispositif de déclenchement supplémentaire un capteur de ralentissement réagissant à un ralentissement à donner.

12. Système selon la revendication 11, caractérisé en ce que le capteur de ralentissement, conformé en dispositif de déclenchement (3) supplémentaire, présente une masse (25) déplaçable dans le plan horizontal et/ou vers le haut et maintenue par un élément de rupture (24) et de ce fait empêchée d'effectuer ce mouvement, qui est pourvue d'un conducteur électrique (26) s'arrachant lors de la rupture de l'élément de rupture (24).

13. Système selon la revendication 12, caractérisé en ce que la masse (25) repose sur une surface d'appui (37) horizontale fixe.

14. Système selon l'une des revendications précédentes, caractérisé en ce qu'il peut être mis en service et hors service par un interrupteur à clé (12) ou un interrupteur de codage.

15. Système selon la revendication 14, caractérisé en ce que l'interrupteur de codage est un interrupteur codé magnétiquement ou électroniquement.

16. Système selon la revendication 14 ou 15, caractérisé en ce que l'interrupteur à clé (12) ou l'interrupteur de codage est conformé en même temps comme interrupteur de service (2) pour le véhicule, ou est contenu dans celui-ci.

17. Système selon l'une des revendications 14 à 16, caractérisé en ce que l'interrupteur à clé (12) est en liaison active avec un interrupteur d'actionnement (44) supplémentaire pour la mise en service ou la mise hors service du système.

18. Système selon la revendication 17, caractérisé en ce qu'il est prévu un dispositif de signalisation acoustique rappelant l'actionnement de l'interrupteur d'actionnement.

19. Système selon l'une des revendications 16 à 18, caractérisé en ce qu'il est en service à l'état hors service de l'interrupteur de service (2) et en ce qu'il est désactivé à l'état enclenché de l'interrupteur de service (2), le système d'alarme et de signalisation pouvant être activés en cas de capteur de ralentissement raccordé ou interrupteur d'urgence en tant que dispositif de déclenchement (3, 4) supplémentaire, en présence d'un signal de déclenchement de ce capteur de ralentissement ou interrupteur d'urgence, à l'état enclenché de l'interrupteur de service (2).

20. Système selon l'une des revendications précédentes, caractérisé en ce que sont prévues au moins deux antennes de localisation et d'émission (42, 43) en différents endroits, dans le véhicule.

21. Système selon l'une des revendications précédentes, caractérisé en ce qu'il est prévu, comme dispositif de déclenchement (39, 41) supplémentaire, un dispositif à mémoire (39), contenant des informations de région à donner, dont le contenu de la mémoire est constamment ou périodiquement comparé aux données de position du dispositif de localisation (7), dans un dispositif de vérification (41), le dispositif de signalisation étant activé en cas de détection de régions non autorisées.

22. Système selon la revendication 21, caractérisé en ce que sont prévus des moyens supplémentaires pour la désactivation d'une électronique de commande pour le moteur du véhicule.

23. Système selon la revendication 11 ou 22, caractérisé en ce que le dispositif à mémoire (39) est conformé en puce à mémoire interchangeable.

24. Système selon la revendication 21 ou 22, caractérisé en ce que le dispositif à mémoire (39) est conformé en puce à mémoire programmable de l'extérieur.

25. Système selon l'une des revendications 21 à 24, caractérisé en ce que le dispositif de vérification (41) est conformé pour l'essentiel en comparateur numérique.
